Europäisches Patentamt

European Patent Office

Office européen des brevets

(11) Publication number: **0 425 406 A2**

# EUROPEAN PATENT APPLICATION

(21) Application number: 90480122.2

(51) Int. Cl.5: **G06F 15/21**

(22) Date of filing: 29.08.90

(30) Priority: 23.10.89 US 425613

(43) Date of publication of application:
02.05.91 Bulletin 91/18

(84) Designated Contracting States:
DE FR GB

(71) Applicant: International Business Machines
Corporation
Old Orchard Road
Armonk, N.Y. 10504(US)

(72) Inventor: Mukherjee, Sujan
1025 Laurel Mill Drive
Roswell, GA 30076(US)
Inventor: Natarajan, Bharath
2170 Meadowind Lane
Marietta, GA 30062(US)

(74) Representative: Bonneau, Gérard
Compagnie IBM France Département de
Propriété Intellectuelle
F-06610 La Gaude(FR)

(54) An automated system for engineering change implementation to minimize wastage of obsoleted items.

(57) Engineering Change Notices are released frequently to replace an obsoleted item or a component in a bill of material (BOM) with one or more new item(s) or BOM component(s) that have different form, fit or function. When such Engineering change needs to be implemented, the process alerts the production planning system such as MRP (Material Requirements Planning) about a pending implementation of an Engineering Change Notice. It then identifies the total available inventory of the obsoleted item or BOM component for allocation to future orders and automatically decrements available inventory based on open orders during Material Requirements Planning and triggers the implementation of the Engineering Change for the new item(s) or BOM component(s) after all available quantities of the obsoleted item or BOM component have been allocated. This eliminates or minimizes wastage of available inventory of the obsoleted item or BOM component. The process provides visibility of customer data as well as consideration for alternate part numbers. The process also provides manual or automatic override capability based on predefined rules.

FIG.1

# AN AUTOMATED SYSTEM FOR ENGINEERING CHANGE IMPLEMENTATION TO MINIMIZE WASTAGE OF OBSOLETED ITEMS

The present invention generally relates to computer based systems for engineering change release and production planning functions in a manufacturing enterprise and, more specifically, to an integration of the engineering change release function with the production planning function in order to provide a simple and efficient automated method of using up available inventory of obsoleted items and breaking in new replacement items as soon as obsoleted items are used up. The specific business process automated by the invention is related to the implementation of engineering change (EC) effectivity commonly known as "use up stock" effectivity or "effectivity based on quantity" which require an integration of the engineering change release process with the material requirements planning process.

In a manufacturing environment, engineering changes are often made to parts used in the manufacturing process. Such engineering changes either replace or modify an existing part with one or more new parts that have a different form, fit or function. Without an accurate assessment of inventory and impact on inventory from the engineering change, the best date for implementing the change cannot be readily determined. As a result, if it is done too quickly, there will be a waste of product, and if it is done too slowly, there will be a shortage of product.

There is a proliferation of books, journal articles, research papers and commercially available software for manufacturing applications such as Computer Aided Design (CAD) and Material Requirements Planning (MRP). An example of commercially available software for CAD is CADAM Incorporated's CADAM (Computer Graphics Augmented Design and Manufacturing System) product. Examples of commercially available software for MRP are IBM Corporation's COPICS (Communications Oriented Production Information and Control System) family of products and MAPICS (Manufacturing Accounting and Production information Control System) family of products.

Traditionally, automated systems for engineering design (CAD) and production planning have worked independently of each other in what is commonly termed as "islands of automation". During the past few years, the focus of research and development has shifted from functional problem solutions to integration of functions which is commonly termed as Computer Integrated Manufacturing (CIM). The current state of the art for CIM is still at the theoretical or conceptual level. Only partial integrations have actually been achieved between selected functional areas of interest at a particular time and place. Currently, there are only a few commercially available systems for engineering change release which attempt to integrate engineering design with engineering change release, but these have only a weak link to production planning systems which were developed independently. A recent example is IBM Corporation's Product Engineering Support product which was announced on April 4, 1989.

In the currently automated implementations of "use up stock" effectivity of engineering changes, the engineering change release systems release Engineering Change Notices to manufacturing plants, indicating the planned date for the notices to become effective. When an Engineering Change Notice is accepted by manufacturing, the effective date is firmed. If the effective date pertains to an obsoleted item or bill of material (BOM) component which is to be replaced by other items or BOM components, then the effective date represents the date of cut over from the obsoleted item or BOM component to the new item or BOM component.

For example, using IBM Corporation's COPICS products, the cut over date has to be pre-estimated by manual observation of projected inventory status which is computed by the MRP application. Between the time the cut over date is established and the time the cut over date actually arrives, requirements for the item or BOM component may change resulting in a change of inventory status. This would make the effective date either too late or too soon to be able to properly use up the available quantity of the obsoleted item or BOM component.

The effect of the cut over date occurring too late is that the material requirements planning system would continue to generate requirements and place orders for the obsoleted item or BOM component to cover the requirements up to the cut over date. This situation is unacceptable since it will defeat the whole purpose of obsolescence. Even if this situation is allowed and a new order for the obsoleted item is placed, the requirements may change during the lead time to replenish the item. Thus, there is no assurance that the exact quantity of the obsoleted item will be allocated and used up when new orders of the obsoleted item are allowed to be placed. Hence, the cut over dates are usually set to be too soon rather than too late. This means that on the cut over date, some available quantities of the obsoleted item are expected to remain unallocated and are allowed to be wasted.

This problem of "use up stock" effectivity is well known, but the proposed solutions- have been too complex, inefficient or otherwise unsuitable for practical implementation. So far, a generally acceptable solution for imple menting an automated method of alerting production planning systems by engineering change release systems about pending Engineering Change Notices for obsoleted items which are to be replaced by other items has not been found. What is needed is a simple and efficient method of recording and releasing pending Engineering Change Notices and a corresponding simple and efficient method for the MRP system to dynamically assign the effective cut over date based on the inventory status at the time of material requirements planning to ensure full allocation and use up of available inventory of obsoleted items and thus avoid or minimize wastage.

It is therefore an object of the present invention to overcome the complexity of prior art solutions and the resulting inability of prior art engineering change release systems to effectively communicate the intent to "use up stock" of obsoleted items and to "break in" new replacement items, by providing a simple and efficient method of releasing "pending" Engineering Change Notices, expressing the intent to use up stock without committing to a cut over date at the time of release.

It is another object of the invention to overcome the complexity of prior art solutions and the resulting inability of prior art production planning and/or material requirements planning systems to fully "use up stock" of obsoleted items and to provide a simple yet effective method of implementing "pending" Engineering Change Notices without precommitted cut over dates, with the ultimate objective of eliminating or reducing wastage by fully allocating and using up stock of obsoleted items.

In order to achieve these objects, the required integration of engineering change release and material requirements planning functions are made possible by this invention by first specifying the following two types of effectivities for pending Engineering Change Notices at the time of engineering change release without specifying any effective date of implementation of these Engineering Change Notices:

1. "Phase out" effectivity for the obsolete item or BOM component without requiring any reference to any replacement item or BOM component to be phased in or "broken in";

2. "Phase in" effectivity for one or more replacement items or BOM components with simple and direct references to the item or BOM component being phased out;

and then allocating the available inventory of the obsoleted item or BOM component until it is fully used up during material requirements planning, through multiple replanning cycles if necessary, and after achieving full allocation, implementing the "break in" of one or more different item(s) or BOM component(s) which replace(s) the obsoleted item or BOM component.

The two new EC effectivity types, i.e., "phase out" effectivity and "phase in" effectivity, replace the single prior art effectivity type known as "use up stock" effectivity or "effectivity based on quantity". To implement the EC effectivity based on quantity, the phase out effectivity is used in conjunction with item disposition parameters to further qualify the effectivity to be implemented either at a quantity of zero (change at "use up") or at a quantity representing how much is to be reserved for usage as service parts, etc. Item disposition parameters are to be specified at the time of engineering change release and are to be used during the allocation process of material requirements planning.

According to the invention, when an engineering change needs to be implemented, a planning system is alerted about a pending implementation of the engineering change. The planning system then identifies total available inventory for allocation to future orders and automatically decrements available inventory based on open orders during material requirement runs and triggers the introduction of the engineering change for the new item after all replaced items are allocated. This eliminates or minimizes wastage of current on-hand available inventory for the item being replaced. The invention provides visibility of customer demand data to the user as well as consideration for alternate part numbers. The system also provides for manual or automatic override capability based on pre-defined rules.

Among the advantages of the invention are the ability to specify alternate items, thus allowing the users to easily refer to the alternatives prior to deciding which item should replace the obsoleted item. The invention provides visibility of customer requirements by allowing phase out and phase in effectivities to be specified for alterations to product configurations for custom configured products. The same method is equally applicable for implementing engineering changes which are effective for specified end product serial or lot numbers rather than customer contracts. The invention also allows manual or automatic override capability based on predefined rules such as selection of alternative items based on a sequence of preferences of multiple alternative items when the most -preferred alternative item is out of stock.

The foregoing and other objects, aspects and advantages will be better understood from the following detailed description of a preferred embodiment of the invention with reference to the drawings, in which:

Figure 1 is a block diagram showing the interface between the engineering change release function and the material requirements planning function;

Figure 2 - is a system flow diagram illustrating initial Material Requirements Planning;

Figure 3 is a system flow diagram illustrating revised Material Requirements Planning;

Figure 4 is an illustration of an initial bill of materials for an assembly A;

Figure 5 is a table representing a data base of the initial Item Master data;

Figure 6 is a table representing a data base of Alternate Item Relationships;

Figure 7 is a table representing a data base of the initial bill of material data;

Figure 8 is a table representing a data base of alternate Component Relationships;

Figure 9 is a table showing an example of the initial Material Requirements Plan for item B;

Figure 10 is a table representing a data base of the updated Item Master data;

Figure 11 is a table showing an example of the updated Material Requirements Plan for item B;

Figure 12 is a table showing an example of the new Material Requirements Plan for item B2;

Figure 13 is a table representing a data base of Item Master data after item B stock out;

Figure 14 is a table showing an example of the initial Material Requirements Plan for item D;

Figure 15 is an illustration of the updated bill of material for assembly A;

Figure 16 is a table representing a data base of the updated bill of material data;

Figure 17 is a table showing an example of the updated Material Requirements Plan for item D;

Figure 18 is a table showing an example of the new Material Requirements Plan for item D1;

Figure 19 is a table showing an example of the new Material Requirements Plan for item D2;

Figure 20 is a table representing a data base of the final bill of material data;

Figure 21 is a block diagram illustrating the relative position of the user with respect to the material requirements planning system and a relational database;

Figure 22 is a flow diagram showing the logic of updating engineering change effectivity according to the invention as implemented on a computer system; and

Figure 23 is a flow diagram showing the logic of Material Requirements Planning with phase out and phase in effectivity.

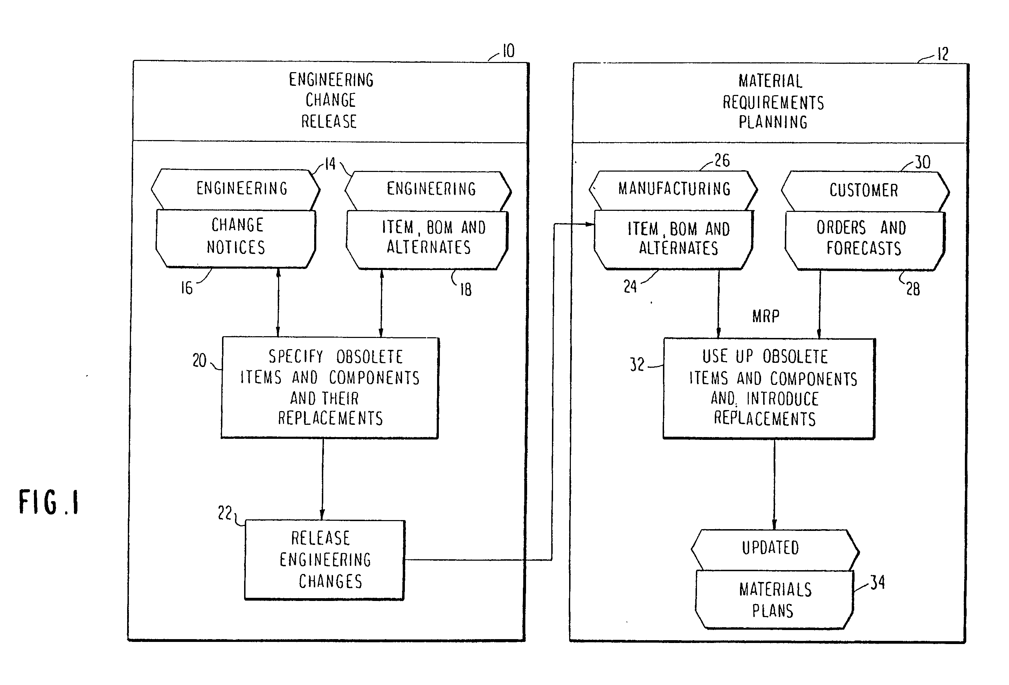

Referring now to the drawings, and more particularly to Figure 1, there is shown the interface between the engineering change (EC) release function 10 and the material requirements planning (MRP) function 12. The EC function involves engineering 14 which results in change notices 16 and/or item, bill of material (BOM) and alternates 18 which specify obsolete items and components and their replacements 20. These specifications arc incorporated into EC notices 22 which, when released, alert the MRP function 12 about pending implementation of the EC. The EC notices 22 identify the item, BOM or alternates 24 in the manufacturing process 26 which are affected. The MRP function also includes as an input orders and forecasts 28 from customers 30. The MRP process 32 then identifies the total available inventory of the obsoleted item or BOM component for allocation to future orders and automatically decrements available inventory based on open orders in order to trigger the implementation of the EC. Based on these computations, the MRP process 32 provides an updated materials plan 34 that would eliminate or minimize wastage of available inventory of the obsoleted item or BOM component.

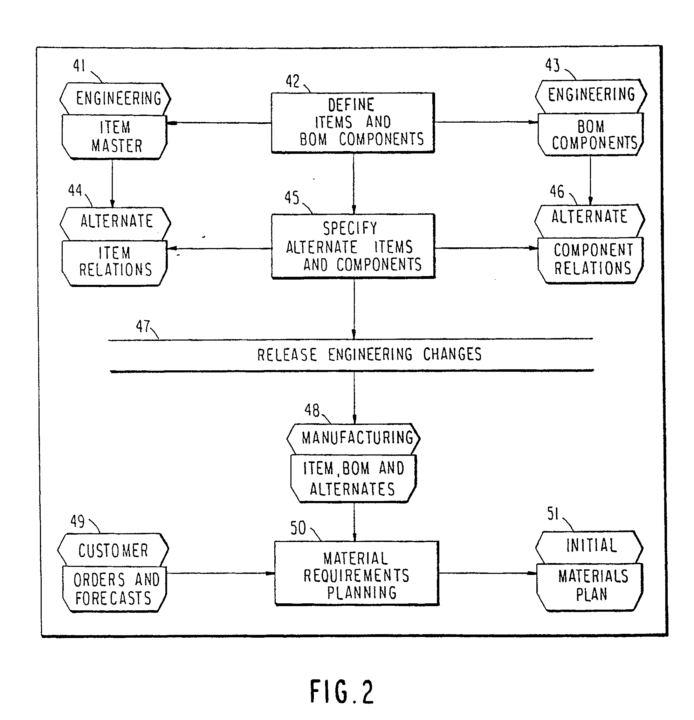

Figure 2 shows an example of the system flow for the initial Material Requirements Planning before considering "use up stock" of any item or BOM component. All data pertaining to certain new items, their bills of material and any alternate items and/or alternate BOM components are recorded in the data base tables 41, 43, 44, and 46 by the design engineering functions. The engineering change release process 47 releases the information to the manufacturing function which can now have access to the data. Based on customer orders and forecast demands 49, the material requirements planning function 50 can now prepare planned orders 51 for these new items.

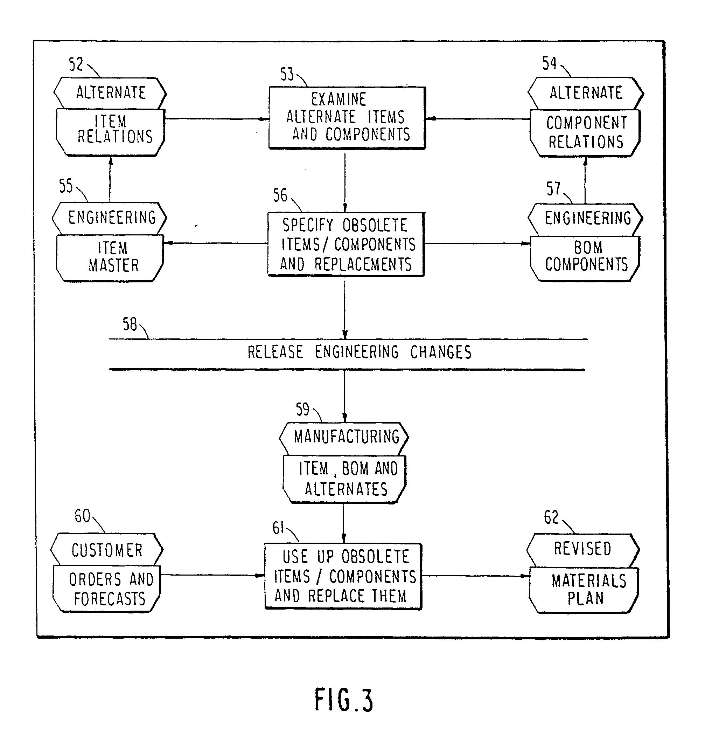

Figure 3 shows an example of the system flow for the revised Material Requirements Planning after considering "use up stock" of any obsoleted item and/or BOM component which may be replaced by other items and/or BOM components. While selecting the replacement items and/or BOM components, the design engineer may choose to search and examine alternate items 52 and/or alternate BOM components 54 which were previously recorded in the data base. After deciding on the appropriate replacement items and/or BOM components, the design engineer specifies the items in 55 and/or BOM components in 57 to be phased out and the replacement items in 55 and/or BOM components in 57 to be phased in as soon as the available inventory of each obsoleted item and/or BOM component is used up. The engineering change release process 58 releases the information to the manufacturing function which can now have access to the revised data in 59. Based on customer orders and forecast demands 60, the material requirements planning function 61 can then use up all obsoleted items and BOM components which are to be phased in.

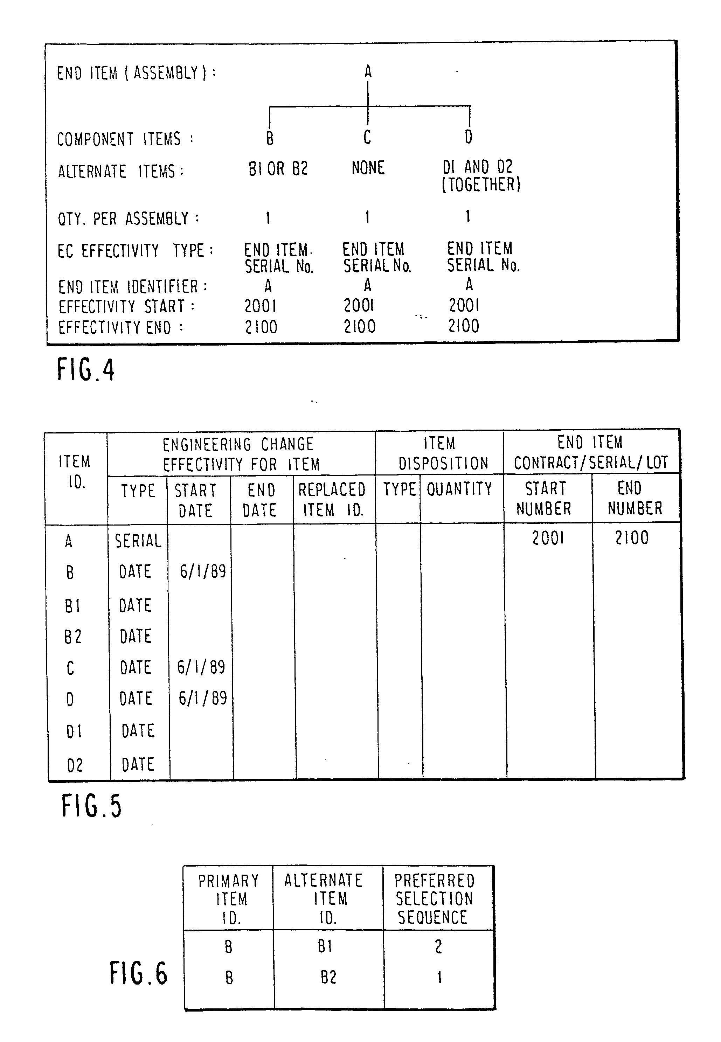

Figure 4 shows an example of the initial bill of material for assembly item A, which is also an end item (highest level item) in a bill of material. The item A is tracked by end item serial numbers, and the bill of material shown is only valid for serial numbers 2001 through 2100. So, the EC effectivity of component items B, C and D are specified to be for serial numbers 2001 through 2100 for end item A. Item B has two alternate items B1 and B2, either of which can be used in place of B. Item D has an alternate in that it can be substituted by a combination of both D1 and D2 taken together. If any of these alternate items is used for substituting a component in this bill of material, then the EC effectivity of the original component is applied to the substituted component.

Figure 5 shows an example of the data base representation of the initial master data for assembly A as shown in Figure 4. Item A is an end item and its EC effectivity type is recorded as end item serial numbers 2001 through 2100 of item A itself. The reason is to distinguish this occurrence of master data for item A from other occurrences of master data from item A (not shown) pertaining to other ranges of serial numbers of item A. ether types of EC effectivities, such as "end item contract number" or "end item lot number" may be specified similar to "end item serial number". The EC effectivity type for items B, C and D are "date" effectivity with start date of 6/1/89. This means that these items can be manufactured to satisfy independent demands with effect from 6/1/89 onwards until the EC effectivity end date which has not been specified as yet. However, as shown in Figure 4, the usage of these items in assembly A has "end item serial number" effectivity which overrides the "date" effectivity data as specified in the item master data for dependent demands created by the usage of these items in assembly A. The EC effectivity start dates for the alternate items B1, B2, D1, and D2 have not yet been specified. These may be either automatically generated at the time of breaking in these new items, or manually entered at any time prior to the planning cycle pertaining to the date of breaking in.

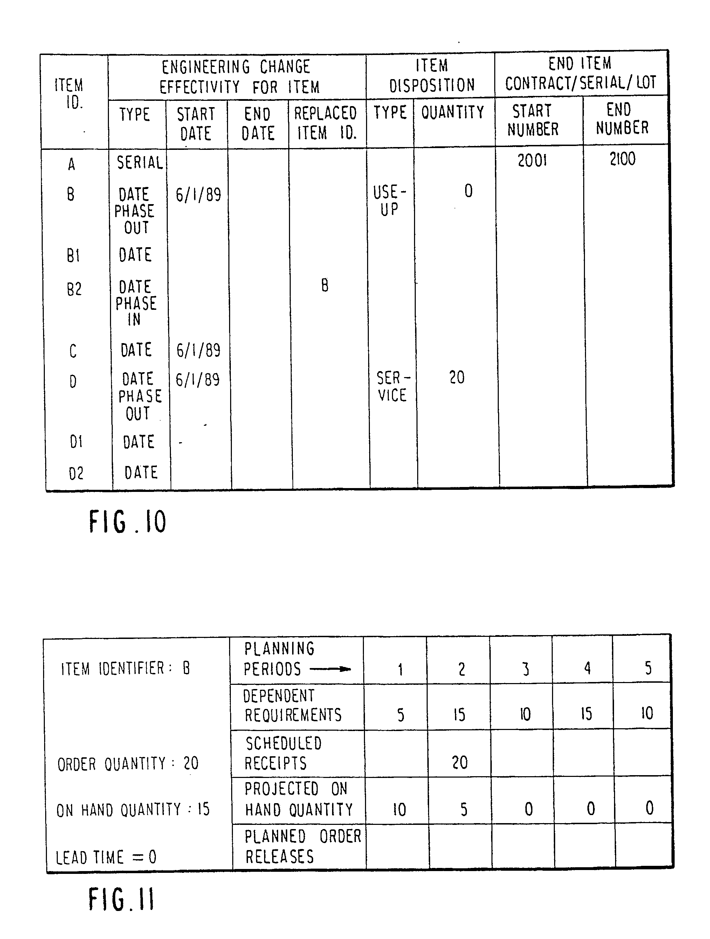

Figure 6 shows an example of the data base representation of alternate item relationships for item B and its alternates as shown in Figure 4. The primary item B can be substituted by either the alternative item B1 or the alternative item B2, with item B2 having a higher selection preference than item B1 as indicated by the Preferred Selection Sequence column. This means that item B can be used as a component in any assembly and it can be always substituted by item B1 or item B2 regardless of item B's usage in any higher level assemblies. In this case, the alternate item relationship data can be used to implement "use up stock" effectivity by blocking ordering of item B and allowing MRP to automatically order item B2 when item B reaches "out of stock" condition. The ordering is blocked by modifying the "date" effectivity of item B to a new type of "date phase out" effectivity (or a combination of date effectivity and a phase out indicator) as shown in Figure 10, described below. Item disposition parameters can also be specified for item B as shown in Figure 10. If item B2 is unavailable, then item B1 can be ordered. Note that MRP will first select item B2 since it has a higher selection preference than that of item B1. If both B1 and B2 had the same selection preference, then MRP can select the appropriate item based on lower unit cost or higher level of unallocated inventory or other selection criteria. This illustrates a simple and efficient new method which may be used for low value items or for other items for which more precise planning is not required. Implementation of more precise planning methods are described later.

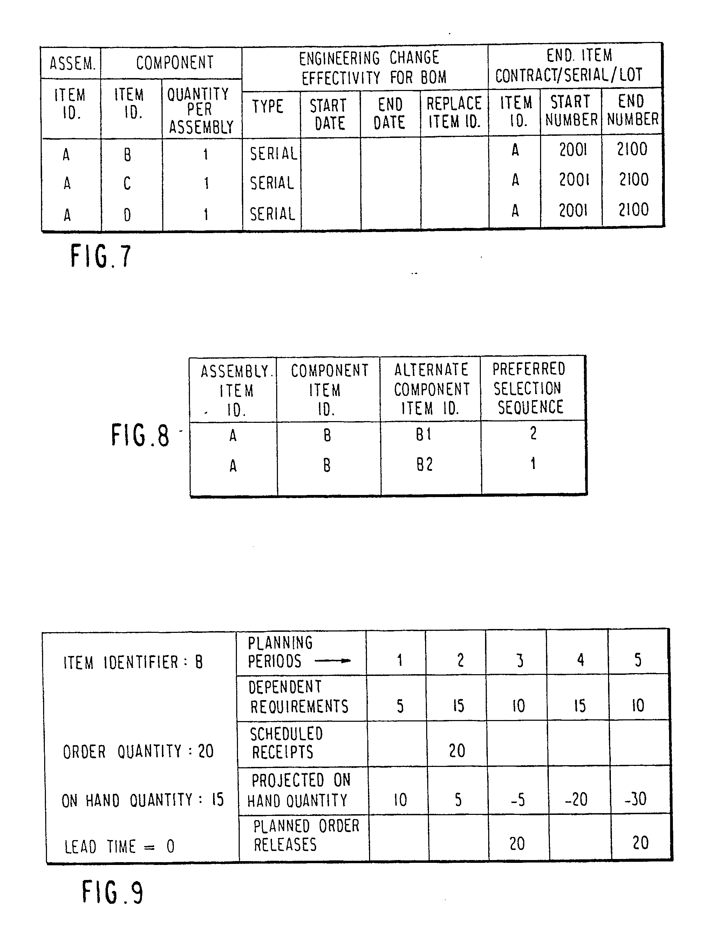

Figure 7 shows an example of the data base representation of the initial bill of material for assembly A as shown in Figure 4. It contains the item identifiers for assembly A and its components B, C and D along with the quantities per assembly and has specified end item serial number effectivity for the components' usage in assembly A for serial numbers 2001 through 2100 of end item A. The end item serial number effectivity for components B, C and D override the date effectivity specified in the item master data for B, C and D when these items are used as components of assembly A.

Figure 8 shows an example of the data base representation of Alternate Component Relationships. The component item B can be substituted by either the alternative item B1 or the alternative item B2, with B2 having higher selection preference than B1 as indicated by the Preferred Selection Sequence column. This implementation is different from the alternate item implementation shown in Figure 6 in that the item B can be substituted by either item B1 or item B2 only when item B is used in assembly A. In this case, the alternate component relationship data can be used to implement "use up stock" effectivity by blocking ordering of item B and allowing MRP to automatically order item B2 when item B reaches "out of stock" condition. The ordering is blocked by modifying the "date" effectivity of item B to a new type of "date phase out" effectivity (or a combination of date effectivity and a phase out indicator) as shown in Figure 10 described below. Item disposition parameters for item B can also be specified as shown in Figure 10. If item B2 is unavailable, then item B1 can be ordered. Note that MRP will first select item B2 since it has a higher selection preference than that of item B1. If both item B1 and item B2 had the same selection preference, then MRP can select the appropriate item based on lower unit cost or higher level of unallocated inventory or other selection criteria. This illustrates a simple and efficient new method which may be used for low value items or for other items for which more precise planning is not required. Implementation of more precise planning methods are described later.

Figure 9 shows an example of the initial Material Requirements Plan for item B for five planning periods which may be days or weeks or any other time periods. The MRP data and logic shown here are the traditional data and logic which are represented in a traditional way for ease of understanding. The item planning data, as shown in this diagram, may be stored in the data base in many different ways.

Figure 10 shows an example of the data base representation of the updated item master data which shows the design engineer's intent to

    a) phase out item B as indicated by a new type of "date phase out" effectivity (or a combination of date effectivity and phase out indicator),

    b) use up all available inventory as indicated by the item disposition type "use up" and disposition quantity 0, and

    c) phase in item B2 to replace item B as indicated by a new type of "date phase in" effectivity (or a combination of date effectivity and a phase in indicator) and the replaced item B.

In this case, the item master data alone can be used to implement "use up stock" effectivity by blocking ordering of item B as it has "date phase out" effectivity and allowing MRP to automatically order item B2 which has "date phase in" effectivity and specifies item B as the replaced item. This illustrates a simple and efficient new method which may be used for all items which are replaced by only one item and the same replacement item is used in all usages of the obsoleted item in higher level assemblies. Figure 10 also shows the design engineer's intent to

    a) phase out item D as indicated by a new type of "date phase out" effectivity (or a combination of date effectivity and a phase out indicator), and

    b) use up all of the available inventory except a quantity of 20 reserved for service parts as indicated by the item disposition type "service" and disposition quantity 20.

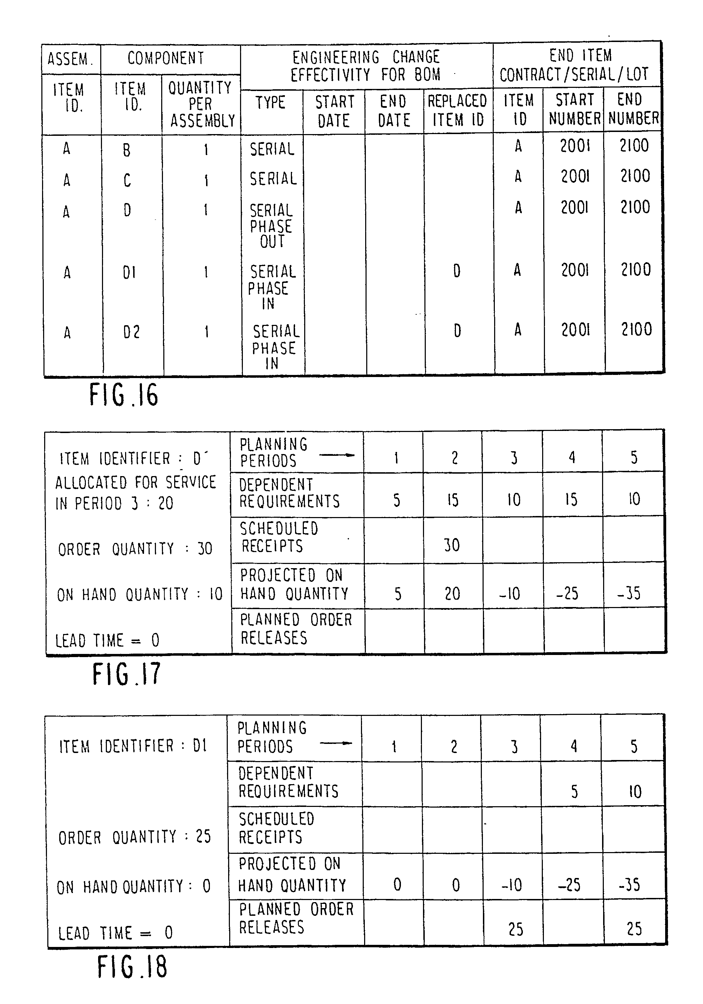

In this case, the replacement items cannot be specified easily within the item master data since item D can be replaced by a combination of D1 and D2. The replacement items are more easily specified in the bill of material as shown in Figures 15 described below.

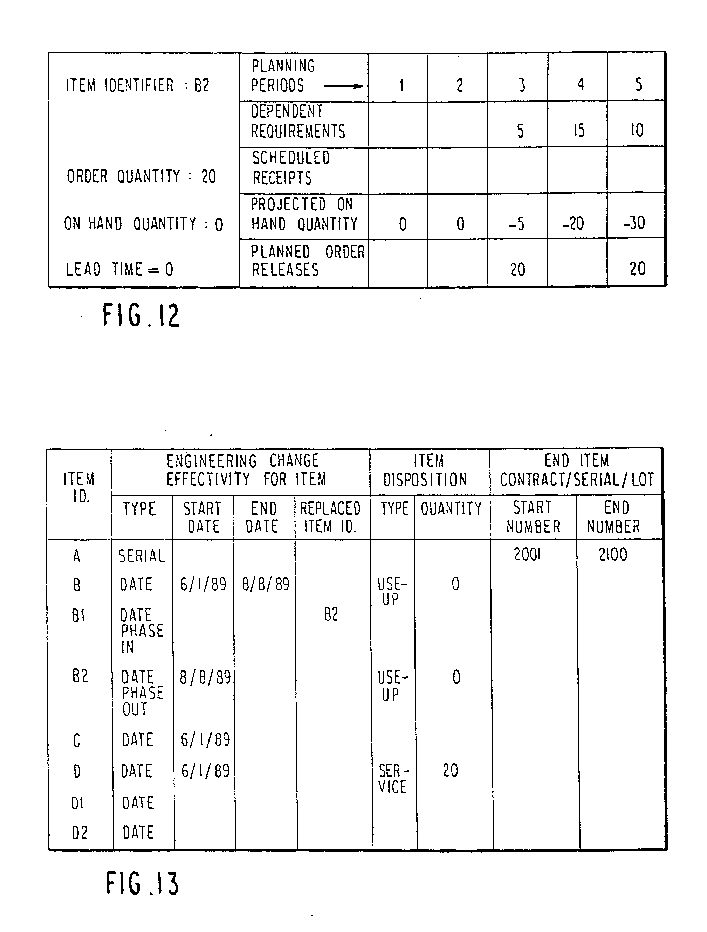

Figure 11 shows an example of the updated Material Requirements Plan for item B after updating the item master data as shown in Figure 10. As compared to the initial Material Requirements Plan for item B shown in Figure 9, the planned order releases are suppressed and the negative projected on hand quantities are changed to zeroes by transferring these negative quantities as positive requirements for item B1. It illustrates a more precise planning as compared to the use of alternated items and alternate components for planning purposes as described for Figures 6 and 8.

Figure 12 shows an example of the new Material Requirements Plan for item B2 which replaced item, B. It illustrates the new method of transferring the negative projected on hand quantities of the obsoleted item B to its replacement item B2 as positive cummulative requirement quantities for the respective time periods. After this process, the traditional MRP process is performed to compute the planned order releases for item B2.

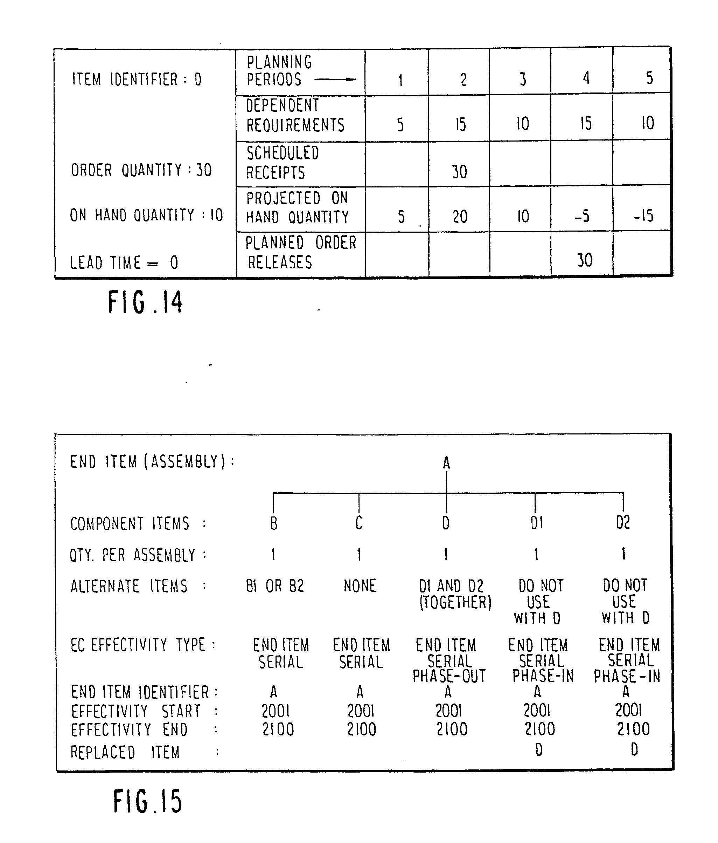

Figure 13 shows an example of the data base representation of Item Master data after item B stock out condition is reached during planning period 3 as shown in Figure 11. The MRP computed stock out date, as determined during the planning cycle in period 3, is assumed to be 8/8/89 which is automatically posted by the MRP system as the effectivity end date for item B, and its effectivity type is changed from "date phase out" effectivity to the original "date" effectivity. Consequently, in material requirements planning cycles after 8/8/89, no new orders will be planned for item B. Since the replacement item B2 has date effectivity, 8/8/89 is automatically posted by the MRP system as the effectivity start date for item B2 This new method of automatic assignment of correct effective dates to pending engineering changes will take away the rough estimates used in the prior art methods of assigning effective dates for items with "use up stock" effectivity. Figure 13 also shows subsequent updates by the design engineer to implement phasing out item B2 and phasing in item B1 to replace it. This is to show an iterative process by which all obsoleted items can be fully used up before standardization or other purposes.

Figure 14 shows an example of the initial Material Requirements Plan for item D which will be used to show the implementation method for an item to be replaced by more than one item, i.e., items D1 and D2, concurrently. The MRP data and logic shown here are the traditional data and logic which are represented in a traditional way for ease of understanding. The item planning data, as shown in this diagram, may be stored in the data base in many different ways.

Figure 15 shows an example of the updated bill of material for assembly A to capture the design engineer's intent to replace item D with two items, D1 and D2, which are schematically shown as alternate items but are not included in the Alternate Item Relationship data. The main point of interest in this diagram is the specification of phase out type of effectivity for item D, phase in type of effectivity for items D1 and D2, and the specification of item D as the replaced item for both D1 and D2. This new type of bill of material structuring is easy to perform and easy for other design engineers to understand.

Figure 16 shows an example of the data base representation of the new type of bill of material structuring as shown in Figure 15. The effectivity type for component item D is modified from "serial" to "serial phase out", and the effectivity type for component items D1 and D2 are modified from "serial" to "serial phase in" with replaced component item specified as the component item D. The component items D1 and D2 are made effective for end item A serial numbers 2001 through 2100, the same as for component item D.

Figure 17 shows an example of the updated Material Requirements Plan for item D after updating the bill of material as shown in Figure 16. As compared to the initial Material Requirements Plan for item D shown in Figure 14, the planned order releases are suppressed and the negative projected on hand quantities are modified as a result of allocating a quantity of 20 for service parts. It illustrates a more precise planning as compared to t-he use of alternated items and alternate components for planning purposes a described for Figures 6 and 8.

Figure 18 shows an example of the new Material Requirements Plan for item D1 which partially replaced item D. It illustrates the new method of transferring the negative projected on hand quantities of the obsoleted item D to its replacement item D1 as positive cumulative requirement quantities for the respective time periods. 1 After this process, the traditional MRP process is performed to compute the planned order releases for item B2.

Figure 19 shows an example of the new Material Requirements Plan for item D2 which partially replaced item D. It illustrates the new method of transferring the negative projected on hand quantities of the obsoleted item D to its replacement item D1 as positive cumulative requirement quantities for the respective time periods. After this process, the traditional MRP process is performed to compute the planned order releases for item B2.

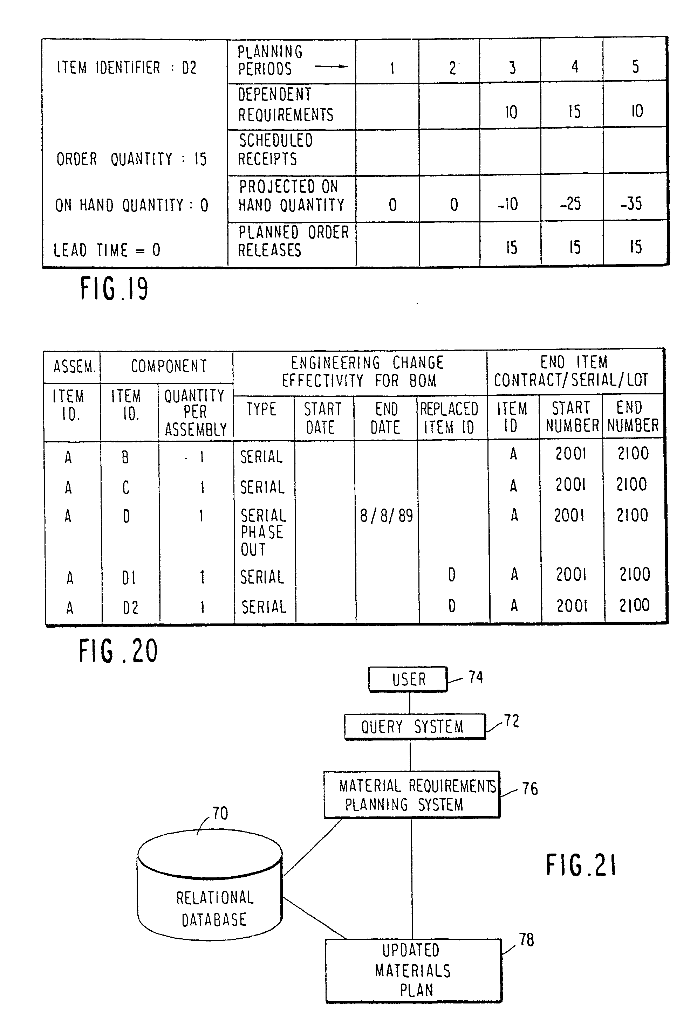

Figure 20 shows an example of the data base representation of the final bill of material data for assembly A after actual stock out of component item D. The effectivity type of "serial phase out" is not converted back to "serial" since there is no real need to do so. The end date of 8/8/89 is entered as a positive indication of the date on which the component item reached stock out condition.

The process described is carried out on a computer system of the type generally shown in Figure 21. Figure 21 illustrates the key parts of the system from the user point of view. The key parts are the database 70 and the query system 72. The database can be any of several products currently available, but for purposes of this preferred embodiment, IBM's DataBase 2 (DB2) is used. DB2 is a relational database management system, but it will be understood by those skilled in the art that other databases, including hierarchical databases, could be used. General information on IBM's DB2 can be had with reference to publication GC26-4073-2 published by IBM Corp. The query system can be an expert system, but for purposes of the preferred embodiment, IBM's Restructured Extended Executor (REXX) language is used. A description of the REXX language is provided in "Virtual Machine/Systems Product, System Product Interpreter User's Guide", Release 4, publication SC24-5238-2 published by IBM Corp.

The user 74 can query the current status, completion date and the priori-ty sequence of any job in question using the query system 72. The query system 72 interfaces with the MRP system 76 which accesses data in database 70, and provides an updated materials plan 78.

The data base as defined has the capability to capture the decision variables tested and the results obtained for each test. The user can access the results using the query facility at a later date, if needed. This enhances the analysis capability of future test data. This also provides an additional enhancement to the system.

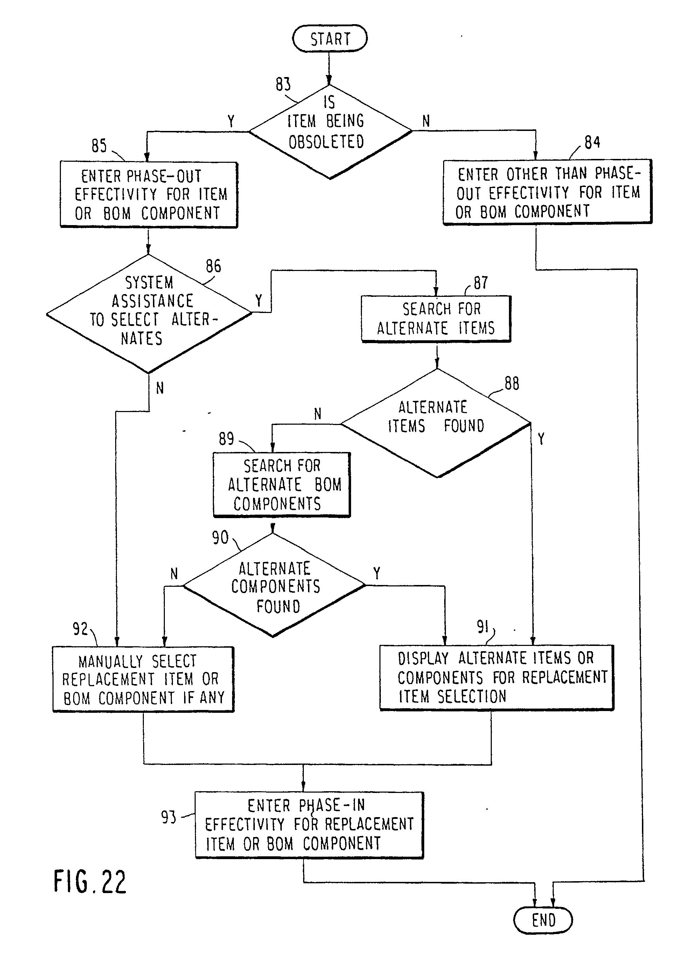

Figure 22 is a flow diagram showing an example of updating engineering change effectivity. When the user wants to update the effectivity for an item or its usage as a bill of material component, the user is prompted in decision block 83 to select the option of whether the item is being obsoleted. If the user answers "no", then in function block 84 the user is allowed to specify any effectivity other than phase-out effectivity, the process stops at that point. If, on the other hand, the user answers "yes" in response to the prompt in decision block 83, then in function blocks 85, the user must specify phase-out effectivity for the item or its usage as a bill of material component. Then the system prompts the user in decision block 86 to select the option of whether system assistance is needed to select a replacement item. If the user answers "no", then the user is allowed in function block 92 to manually select the replacement item or bill of material component. If the user answers "yes", then the system searches in function block 87 for any alternate items which have phase-in effectivity matching with the item being phased out. If a match is found in decision block 88, then all matching items are displayed in function block 91 for the user to choose from. If no alternate item is found in decision block 88, then the item's parent assembly is searched in function block 89 for any alternate components which have phase-in effectivity matching with the component being phased out. If a match is found in decision block 90, then all matching components are displayed in function block 91 for the user to choose from. If no alternate component is found in decision block 90, then the user is allowed in function block 92 to manually select the replacement item or bill of material component. After the user selects the alternate item or bill of material component in either block 91 or block 92, the user is allowed in function block 93 to enter phase-in effectivity for the selected item or bill of material component, and the process ends after that.

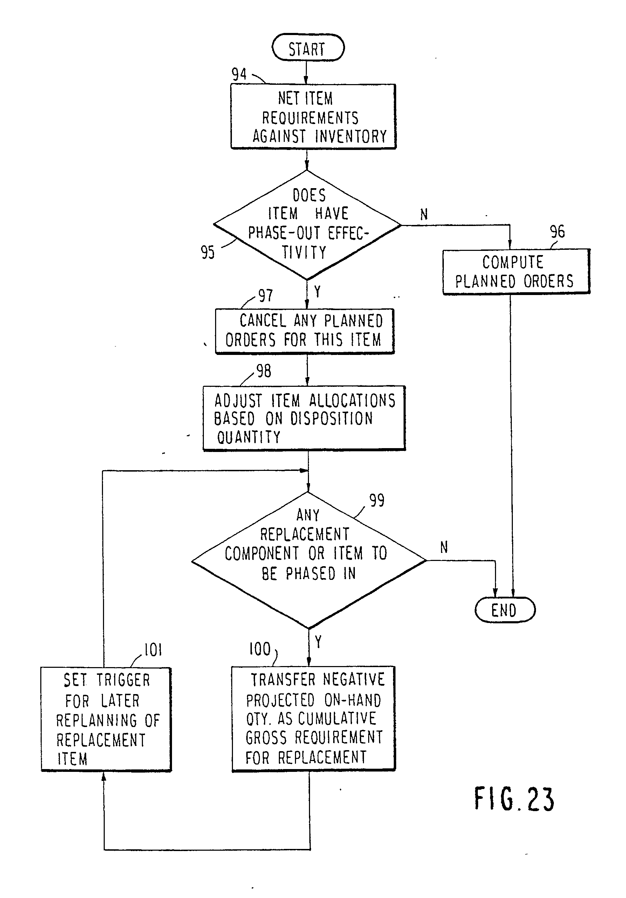

Figure 23 is a flow diagram showing an example of requirements planning with phase-out and phase-in effectivity. It is assumed that the gross requirements have already been generated for an item using conventional requirements planning methods. In function block 94, the requirements are netted against available inventory. The system then checks in decision block 95 whether the item has phase-out effectivity. If not, then the conventional planned orders are generated and the process ends. If the item has phase-out effectivity, then the planned orders are cancelled in function block 97, and the inventory allocations are adjusted by the item disposition quantity in function block 98. Then, in decision block 99, the alternate items and the alternate components within the same parent assembly are searched to find those with phase-in effectivity which replace the item being phased out. When such replacements are found, the negative projected on-hand quantities of the item being phased out are transferred in function block 100 as cumulative requirements for the replacement items. Since the requirements of the replacement items have changed, replanning triggers are set in function block 101 for later replanning of these items. There may be none or one or more than one such replacement items or bill of material components. The process ends when no more replacements are found in decision block 99.

## Claims

1. An automated method for engineering change implementation to minimize wastage of obsoleted items, said method being characterized in that it comprises the computer processing steps of:
recording a user's intent to phase out obsoleted items and/or obsoleted bill of material components prior to releasing engineering change notices for affected items and/or bill of material components to manufacturing;

recording a user's intent to phase in matching replacement items and/or bill of material components prior to releasing engineering change notices for affected items and/or bill of material components to manufacturing;

releasing the engineering change notices to manufacturing comprising all affected items and/or bill of material components to be phased out and phased in;

using a matching material requirements planning system which is capable of interpreting the intent to phase out obsoleted items and/or bill of material components and planning according to the recorded intent;

using said matching material requirements planning system which is also capable of interpreting the intent to phase in matching replacement items and/or bill of material components and planning according to the recorded intent;

integrating the engineering change release process with the material requirements planning process via data sharing or data exchange and synchronizing the two processes as required for minimizing wastage of obsoleted items and/or bill of material components by maximum utilization of the available inventory of obsoleted items and/or obsoleted bill of material components and timely introduction of matching replacement items and/or bill of material components.

2. The automated method according to claim 1 wherein the user of the system marks those items and/or bill of material components to be obsoleted without selecting replacement items and/or bill of materials components, characterized in that said material requirements planning system then automatically uses predefined alternate items and/or alternate bill of material components to select matching replacement items and/or bill of material components following predefined preferred sequences of selection.

3. The automated method according to claim 2 wherein the user of the system marks the items and/or bill of material components to be obsoleted, characterized in that the system then displays predefined alternate items and/or alternate bill of material components to allow the user of the system to override the automatic selection of replacement items and/or bill of material components and to facilitate selection and recording of appropriate replacement items and/or bill of materials components.

4. The automated method according to claim 2 further characterized in that it comprises the step of providing an option to the user of establishing a predefined quantity of an old engineering change item for reserve stock prior to cut over to a new item.

5. The automated method according to claim 1 wherein said computer system includes a data base and a query system, further characterized in that it comprises the steps of:

capturing decision variables input by a user pertaining to item type and alternate bill of material in the data base;

responding to a user input via the query system to access the decision variables and bills of material captured in the data base; and

displaying the alternate bills of material along with the system suggested engineering change break in date.

6. The automated method according to claim 1, further characterized in that it comprises the step of providing an option to the user-of changing the engineering change implementation by date or by quantity based on system recommended feed back.

7. A computer system including a data base and a query system for implementing engineering changes to minimize wastage of obsolete items, said computer system being characterized in that it comprises:

means for recording in said data base a user's intent to phase out obsoleted items and/or obsoleted bill of material components prior to releasing engineering change notices for affected items and/or bill of material components to manufacturing;

means for recording in said data base a user's intent to phase in matching replacement items and/or bill of material components prior to releasing engineering change notices for affected items and/or bill of material components to manufacturing;

means for releasing the engineering change notices to manufacturing comprising all affected items and/or bill of material components to be phased out and phased in;

a matching material requirements planning system installed on said computer system, said matching material requirements planning system being capable of interpreting the intent to phase out obsoleted items and/or bill of material components and planning according to the recorded intent and also being capable of interpreting the intent to phase in matching replacement items and/or bill of material components and planning according to the recorded intent; and

means for integrating the engineering change release process with the material requirements planning process via data sharing or data exchange and synchronizing the two processes as required for minimizing wastage of obsoleted items and/or bill of material components by maximum utilization of the available inventory of obsoleted items and/or obsoleted bill of material components and timely introduction of matching replacement items and/or bill of material components.

8. The computer system according to claim 7 further characterized in that it comprises means responsive to a user marking those items and/or bill of material components to be obsoleted without selecting replacement items and/or bill of materials components, said material requirements planning system then automatically using predefined alternate items and/or alter nate bill of material components to select matching replacement items and/or bill of material components following predefined preferred sequences of selection.

9. The computer system according to claim 8 wherein said means responsive to user marking is further responsive to the user marking the items and/or bill of material components to be obsoleted, said computer system being further characterized in that it comprises means for displaying predefined alternate items and/or alternate bill of material components to allow the user of the system to override the automatic selection of replacement items and/or bill of material components and to facilitate selection and recording of appropriate replacement items and/or bill of materials components.

10. The computer system according to claim 7 further characterized in that it comprises:

means for capturing decision variables input by a user pertaining to item type and alternate bill of material in said data base;

means for responding to a user input via said query system to access the decision variables and bills of material captured in the data base; and

means for displaying the alternate bills of material along with the system suggested engineering change break in date.

FIG.1

EP 0 425 406 A2

FIG.2

FIG.3

```
END ITEM ( ASSEMBLY ) :                    A
                                           |
                              ┌────────────┼────────────┐
COMPONENT ITEMS :             B            C            D
ALTERNATE  ITEMS :         B1 OR B2      NONE        DI AND D2
                                                     (TOGETHER)

QTY. PER ASSEMBLY :           1            1            1

EC EFFECTIVITY  TYPE :     END ITEM.    END ITEM     END ITEM
                          SERIAL No.   SERIAL No.   SERIAL No.
END ITEM IDENTIFIER :         A            A            A
EFFECTIVITY START :          2001         2001         2001
EFFECTIVITY END :            2100         2100         2100
```

## FIG.4

| ITEM I.D. | ENGINEERING CHANGE EFFECTIVITY FOR ITEM | | | | ITEM DISPOSITION | | END ITEM CONTRACT/SERIAL/LOT | |
|---|---|---|---|---|---|---|---|---|
| | TYPE | START DATE | END DATE | REPLACED ITEM ID. | TYPE | QUANTITY | START NUMBER | END NUMBER |
| A | SERIAL | | | | | | 2001 | 2100 |
| B | DATE | 6/1/89 | | | | | | |
| B1 | DATE | | | | | | | |
| B2 | DATE | | | | | | | |
| C | DATE | 6/1/89 | | | | | | |
| D | DATE | 6/1/89 | | | | | | |
| D1 | DATE | | | | | | | |
| D2 | DATE | | | | | | | |

## FIG.5

## FIG.6

| PRIMARY ITEM I.D. | ALTERNATE ITEM I.D. | PREFERRED SELECTION SEQUENCE |
|---|---|---|
| B | B1 | 2 |
| B | B2 | 1 |

| ASSEM. | COMPONENT | | ENGINEERING CHANGE EFFECTIVITY FOR BOM | | | | END. ITEM CONTRACT/SERIAL/LOT | | |
|---|---|---|---|---|---|---|---|---|---|
| ITEM ID. | ITEM ID. | QUANTITY PER ASSEMBLY | TYPE | START DATE | END DATE | REPLACE ITEM ID. | ITEM ID. | START NUMBER | END NUMBER |
| A | B | 1 | SERIAL | | | | A | 2001 | 2100 |
| A | C | 1 | SERIAL | | | | A | 2001 | 2100 |
| A | D | 1 | SERIAL | | | | A | 2001 | 2100 |

FIG.7

FIG.8

| ASSEMBLY. ITEM ID. | COMPONENT ITEM ID. | ALTERNATE COMPONENT ITEM ID. | PREFERRED SELECTION SEQUENCE |
|---|---|---|---|
| A | B | B1 | 2 |
| A | B | B2 | 1 |

| ITEM IDENTIFIER : B | PLANNING PERIODS ⟶ | 1 | 2 | 3 | 4 | 5 |
|---|---|---|---|---|---|---|
| | DEPENDENT REQUIREMENTS | 5 | 15 | 10 | 15 | 10 |
| ORDER QUANTITY : 20 | SCHEDULED RECEIPTS | | 20 | | | |
| ON HAND QUANTITY : 15 | PROJECTED ON HAND QUANTITY | 10 | 5 | -5 | -20 | -30 |
| LEAD TIME = 0 | PLANNED ORDER RELEASES | | | 20 | | 20 |

FIG.9

| ITEM I.D. | ENGINEERING CHANGE EFFECTIVITY FOR ITEM | | | | ITEM DISPOSITION | | END ITEM CONTRACT/SERIAL/LOT | |
|---|---|---|---|---|---|---|---|---|
| | TYPE | START DATE | END DATE | REPLACED ITEM I.D. | TYPE | QUANTITY | START NUMBER | END NUMBER |
| A | SERIAL | | | | | | 2001 | 2100 |
| B | DATE PHASE OUT | 6/1/89 | | | USE-UP | 0 | | |
| B1 | DATE | | | | | | | |
| B2 | DATE PHASE IN | | | B | | | | |
| C | DATE | 6/1/89 | | | | | | |
| D | DATE PHASE OUT | 6/1/89 | | | SER-VICE | 20 | | |
| D1 | DATE | | | | | | | |
| D2 | DATE | | | | | | | |

## FIG.10

| ITEM IDENTIFIER : B | PLANNING PERIODS ⟶ | 1 | 2 | 3 | 4 | 5 |
|---|---|---|---|---|---|---|
| | DEPENDENT REQUIREMENTS | 5 | 15 | 10 | 15 | 10 |
| ORDER QUANTITY : 20 | SCHEDULED RECEIPTS | | 20 | | | |
| ON HAND QUANTITY : 15 | PROJECTED ON HAND QUANTITY | 10 | 5 | 0 | 0 | 0 |
| LEAD TIME = 0 | PLANNED ORDER RELEASES | | | | | |

## FIG.11

| ITEM IDENTIFIER : B2 | PLANNING PERIODS ⟶ | 1 | 2 | 3 | 4 | 5 |
|---|---|---|---|---|---|---|
| | DEPENDENT REQUIREMENTS | | | 5 | 15 | 10 |
| ORDER QUANTITY : 20 | SCHEDULED RECEIPTS | | | | | |
| ON HAND QUANTITY : 0 | PROJECTED ON HAND QUANTITY | 0 | 0 | −5 | −20 | −30 |
| LEAD TIME = 0 | PLANNED ORDER RELEASES | | | 20 | | 20 |

## FIG.12

| ITEM ID. | ENGINEERING CHANGE EFFECTIVITY FOR ITEM | | | | ITEM DISPOSITION | | END ITEM CONTRACT/SERIAL/LOT | |
|---|---|---|---|---|---|---|---|---|
| | TYPE | START DATE | END DATE | REPLACED ITEM ID. | TYPE | QUANTITY | START NUMBER | END NUMBER |
| A | SERIAL | | | | | | 2001 | 2100 |
| B | DATE | 6/1/89 | 8/8/89 | | USE-UP | 0 | | |
| B1 | DATE PHASE IN | | | B2 | | | | |
| B2 | DATE PHASE OUT | 8/8/89 | | | USE-UP | 0 | | |
| C | DATE | 6/1/89 | | | | | | |
| D | DATE | 6/1/89 | | | SER-VICE | 20 | | |
| D1 | DATE | | | | | | | |
| D2 | DATE | | | | | | | |

## FIG.13

| ITEM IDENTIFIER : D | PLANNING PERIODS ⟶ | 1 | 2 | 3 | 4 | 5 |
|---|---|---|---|---|---|---|
| | DEPENDENT REQUIREMENTS | 5 | 15 | 10 | 15 | 10 |
| ORDER QUANTITY : 30 | SCHEDULED RECEIPTS | | 30 | | | |
| ON HAND QUANTITY : 10 | PROJECTED ON HAND QUANTITY | 5 | 20 | 10 | -5 | -15 |
| LEAD TIME = 0 | PLANNED ORDER RELEASES | | | | 30 | |

## FIG.14

| END ITEM (ASSEMBLY): | | | A | | |
|---|---|---|---|---|---|
| COMPONENT ITEMS : | B | C | D | D1 | D2 |
| QTY. PER ASSEMBLY : | 1 | 1 | 1 | 1 | 1 |
| ALTERNATE ITEMS : | B1 OR B2 | NONE | D1 AND D2 (TOGETHER) | DO NOT USE WITH D | DO NOT USE WITH D |
| EC EFFECTIVITY TYPE : | END ITEM SERIAL | END ITEM SERIAL | END ITEM SERIAL PHASE-OUT | END ITEM SERIAL PHASE-IN | END ITEM SERIAL PHASE-IN |
| END ITEM IDENTIFIER : | A | A | A | A | A |
| EFFECTIVITY START : | 2001 | 2001 | 2001 | 2001 | 2001 |
| EFFECTIVITY END : | 2100 | 2100 | 2100 | 2100 | 2100 |
| REPLACED ITEM : | | | | D | D |

## FIG.15

| ASSEM. | COMPONENT | | ENGINEERING CHANGE EFFECTIVITY FOR BOM | | | | END ITEM CONTRACT/SERIAL/LOT | | |
|---|---|---|---|---|---|---|---|---|---|
| ITEM ID. | ITEM ID. | QUANTITY PER ASSEMBLY | TYPE | START DATE | END DATE | REPLACED ITEM ID | ITEM ID | START NUMBER | END NUMBER |
| A | B | 1 | SERIAL | | | | A | 2001 | 2100 |
| A | C | 1 | SERIAL | | | | A | 2001 | 2100 |
| A | D | 1 | SERIAL PHASE OUT | | | | A | 2001 | 2100 |
| A | D1 | 1 | SERIAL PHASE IN | | | D | A | 2001 | 2100 |
| A | D2 | 1 | SERIAL PHASE IN | | | D | A | 2001 | 2100 |

FIG.16

| ITEM IDENTIFIER : D | PLANNING PERIODS ⟶ | 1 | 2 | 3 | 4 | 5 |
|---|---|---|---|---|---|---|
| ALLOCATED FOR SERVICE IN PERIOD 3 : 20 | DEPENDENT REQUIREMENTS | 5 | 15 | 10 | 15 | 10 |
| ORDER QUANTITY : 30 | SCHEDULED RECEIPTS | | 30 | | | |
| ON HAND QUANTITY : 10 | PROJECTED ON HAND QUANTITY | 5 | 20 | −10 | −25 | −35 |
| LEAD TIME = 0 | PLANNED ORDER RELEASES | | | | | |

FIG.17

| ITEM IDENTIFIER : D1 | PLANNING PERIODS ⟶ | 1 | 2 | 3 | 4 | 5 |
|---|---|---|---|---|---|---|
| | DEPENDENT REQUIREMENTS | | | | 5 | 10 |
| ORDER QUANTITY : 25 | SCHEDULED RECEIPTS | | | | | |
| ON HAND QUANTITY : 0 | PROJECTED ON HAND QUANTITY | 0 | 0 | −10 | −25 | −35 |
| LEAD TIME = 0 | PLANNED ORDER RELEASES | | | 25 | | 25 |

FIG.18

| ITEM IDENTIFIER : D2 | PLANNING PERIODS ⟶ | 1 | 2 | 3 | 4 | 5 |
|---|---|---|---|---|---|---|
| | DEPENDENT REQUIREMENTS | | | 10 | 15 | 10 |
| ORDER QUANTITY : 15 | SCHEDULED RECEIPTS | | | | | |
| ON HAND QUANTITY : 0 | PROJECTED ON HAND QUANTITY | 0 | 0 | -10 | -25 | -35 |
| LEAD TIME = 0 | PLANNED ORDER RELEASES | | | 15 | 15 | 15 |

FIG.19

| ASSEM. | COMPONENT | | ENGINEERING CHANGE EFFECTIVITY FOR BOM | | | | END ITEM CONTRACT/SERIAL/LOT | | |
|---|---|---|---|---|---|---|---|---|---|
| ITEM ID. | ITEM ID. | QUANTITY PER ASSEMBLY | TYPE | START DATE | END DATE | REPLACED ITEM ID | ITEM ID | START NUMBER | END NUMBER |
| A | B | - 1 | SERIAL | | | | A | 2001 | 2100 |
| A | C | 1 | SERIAL | | | | A | 2001 | 2100 |
| A | D | 1 | SERIAL PHASE OUT | | 8/8/89 | | A | 2001 | 2100 |
| A | D1 | 1 | SERIAL | | | D | A | 2001 | 2100 |
| A | D2 | 1 | SERIAL | | | D | A | 2001 | 2100 |

FIG.20

USER — 74

QUERY SYSTEM — 72

MATERIAL REQUIREMENTS PLANNING SYSTEM — 76

70

RELATIONAL DATABASE

FIG.21

UPDATED MATERIALS PLAN — 78

19

FIG.22

START

94 NET ITEM
REQUIREMENTS
AGAINST INVENTORY

DOES
ITEM HAVE
95 PHASE-OUT EFFEC-
TIVITY

N → 96 COMPUTE
PLANNED ORDERS

Y

97 CANCEL ANY PLANNED
ORDERS FOR THIS ITEM

98 ADJUST ITEM ALLOCATIONS
BASED ON DISPOSITION
QUANTITY

99 ANY
REPLACEMENT
COMPONENT OR ITEM TO
BE PHASED IN

N → END

Y

101 SET TRIGGER
FOR LATER
REPLANNING OF
REPLACEMENT
ITEM

100 TRANSFER NEGATIVE
PROJECTED ON-HAND
QTY. AS CUMULATIVE
GROSS REQUIREMENT
FOR REPLACEMENT

FIG.23

21